# EUROPÄISCHE PATENTANMELDUNG

(11) **EP 2 928 054 A1**
(43) Veröffentlichungstag der Anmeldung: **07.10.2015**
(21) Anmeldenummer: 14001179.2
(22) Anmeldetag: 31.03.2014
(51) Int. Cl.: H02M 1/12, H02M 7/483

(54) **Modulare Stromrichterschaltung mit Submodulen, die im Linearbetrieb betrieben werden**

(71) Anmelder: Siemens Aktiengesellschaft, 80333 München (DE)
(72) Erfinder: Friedrich, Christian, 66839 Schmelz (DE)

(57) **Zusammenfassung**

Die Erfindung betrifft eine Stromrichterschaltung (1) aufweisend
- einen Gleichspannungsanschluss (13),
- mindestens einen wechselspannungsseitigen Anschluss (12) und
- mindestens ein Phasenmodul (10),

wobei das Phasenmodul (10) eine Reihenschaltung von einem oberen und einem unteren Stromrichterventil (11a, 11b) aufweist, wobei eine elektrische Verbindung zwischen dem oberen und dem unteren Stromrichterventil (11a, 11b) den wechselspannungsseitigen Anschluss (12) darstellt, wobei die Anschlüsse (14a, 14b) des Phasenmoduls (10) mit dem Gleichspannungsanschluss (13) elektrisch verbunden sind, wobei das obere und das untere Stromrichterventil (11a, 11b) jeweils wenigstens zwei Submodule (20, 30) aufweisen, die elektrisch in Reihe angeordnet sind, wobei die Submodule (20, 30) mindestens einen Kondensator (42), mindestens einen Leistungshalbleiter (41) und eine Ansteuerbaugruppe (50) zur Ansteuerung der Leistungshalbleiter (41) aufweisen, wobei mindestens ein Stromrichterventil (11a, 11b) ein für einen Linearbetrieb geeignetes Submodul (30) aufweist und wobei die Stromrichterschaltung (1) eine Ansteuerbaugruppe (50) aufweist, die den Linearbetrieb des für einen Linearbetrieb geeigneten Submoduls (30) ermöglicht. Des Weiteren betrifft die Erfindung ein Verfahren zum Betreiben einer erfindungsgemäßen Stromrichterschaltung (1) wobei in mindestens einem Stromrichterventil (11a, 11b) mindestens ein Submodul (30) im Linearbetrieb betrieben wird.

## Beschreibung

Die Erfindung betrifft eine Stromrichterschaltung aufweisend
- einen Gleichspannungsanschluss,
- mindestens einen wechselspannungsseitigen Anschluss und
- mindestens ein Phasenmodul,
wobei das Phasenmodul eine Reihenschaltung von einem oberen und einem unteren Stromrichterventil aufweist,
wobei eine elektrische Verbindung zwischen dem oberen und dem unteren Stromrichterventil den wechselspannungsseitigen Anschluss darstellt,
wobei Anschlüsse des Phasenmoduls mit dem Gleichspannungsanschluss elektrisch verbunden sind,
wobei das obere und das untere Stromrichterventil jeweils wenigstens zwei Submodule aufweisen, die elektrisch in Reihe angeordnet sind,
wobei die Submodule mindestens einen Kondensator und mindestens einen Leistungshalbleiter aufweisen

Stromrichter werden dazu verwendet, elektrische Leistung bezüglich Spannungshöhe, Stromhöhe, Frequenz und Phasenlage umzuwandeln. Stromrichter für die Umwandlung von Wechselspannung in Gleichspannung bzw. von Wechselstrom in Gleichstrom werden als Gleichrichter bezeichnet. Demgegenüber bezeichnet man Stromrichter für die Umwandlung von Gleichspannung in Wechselspannung bzw. von Gleichstrom in Wechselstrom als Wechselrichter. Stromrichter für die Umwandlung von Leistungen mit Spannungen/Strömen einer Frequenz in eine andere Frequenz werden als (Frequenz-)Umrichter bezeichnet.

Stromrichter werden eingesetzt, um elektrische Maschinen und Motoren gezielt mit elektrischer Energie zu versorgen. Dadurch sind diese elektrische Maschinen und Motoren durch die Stromrichter steuerbar und regelbar. Ein weiteres Anwendungsgebiet ist die Steuerung von Energieflüssen, die Kompensation von Oberschwingungen und das Bereitstellen von Blindleistung in Energieversorgungsnetzen. Darüber hinaus sind Stromrichter an der verlustarmen Übertragung von Energie mittels Hochspannungsgleichstromübertragung (HGÜ) beteiligt.

Bei der Beschreibung der wechselspannungsseitigen Ausgangsspannung von Stromrichtern unterscheidet man zwischen einer verketteten Spannung, die zwischen den einzelnen wechselspannungsseitigen Ausgängen des Stromrichters anliegt, einer Spannung zwischen einem Ausgang und einem Bezugspotential, auch als Leiterspannung bezeichnet und einem Nullsystem. Das Nullsystem wird gebildet, indem die Leiterspannungen addiert werden und durch die Anzahl der Leiter geteilt wird. Die Spannung des Nullsystems hat dabei keinen Einfluss auf die verkettete Spannung.

Auf leistungselektronischer Basis kann mit Hilfe von Stromrichtern eine periodische Wechselspannung auf zwei Arten generiert werden:
- Pulsfrequentes Schalten (Pulsweitenmodulation)
- Lineares Stellen/Regeln.

Beim pulsfrequenten Schalten werden Halbleiter in beliebiger Topologie mit einer Frequenz deutlich höher als die Frequenz der Ausgangsspannung gesteuert. Die Spannungsform wird über eine variable Pulsweite eingeprägt. Vorgeschaltete Energiespeicher glätten Strom und Spannung. Es verbleibt neben der gewünschten Spannung eine hochfrequente Störung auf den Ausgangsgrößen, die durch entsprechend hohen Filteraufwand reduzierbar, aber meist nicht völlig eliminierbar ist. Um eine Ausgangsspannung mit hoher Qualität zu erhalten muss mit der größten möglichen Pulsfrequenz geschaltet werden. Energiespeicher und Filter auf der Ausgangsseite müssen hinreichend groß dimensioniert sein. Beides reduziert den Gesamtwirkungsgrad des Systems erheblich und ist mit hohen Kosten verbunden.

Mit einem linearen Steller lässt sich durch gezieltes Öffnen und Reduzieren der Halbleiter-Ventile eine beliebige Ausgangsspannungsform ohne hochfrequente Störungen einstellen. Dabei wird die Spannungsdifferenz zwischen DC-Spannung und Wechselspannung im Halbleiter vollständig in Wärme umgewandelt. Je nach Aussteuergrad und Kurvenform wird im Halbleiter mehr Wärmeenergie umgesetzt als elektrisch nach außen abgegeben wird. Kleinere Aussteuergrade reduzieren den Wirkungsgrad weiter. Der lineare Steller kommt daher in der Energietechnik aufgrund seiner sehr hohen Verluste nur äußerst selten zum Einsatz. Aufgrund der hohen Anforderung an Kühlung sind nur Anwendungen mit relativ kleinen Leistungen sinnvoll realisierbar.

Darüber hinaus ist ein modulare Multilevel-Stromrichter aus der DE 101 03 031 A1 bekannt. Bei diesem Aufbau kann bereits eine Ausgangsspannung mit geringen Oberschwingungen erzeugt werden, da die mit dem modularen Multilevel-Stromrichter erzeugte Ausgangsspannung eine Treppenform darstellt. Filter zur Beseitigung von Oberschwingungen können bei diesem Stromrichter besonders klein und aufwandsarm realisiert werden.

Der Erfindung liegt die Aufgabe zugrunde, einen kostengünstigen und zuverlässigen modularen Multilevel-Stromrichter anzugeben, dessen Ausgangsspannung einen Sinusverlauf annehmen kann ohne dabei störende Oberschwingungen zu enthalten.

Diese Aufgabe wird durch eine Stromrichterschaltung dadurch gelöst, dass mindestens ein Stromrichterventil ein für einen Linearbetrieb geeignetes Submodul aufweist und dass die Stromrichterschaltung eine Ansteuerbaugruppe aufweist, die den Linearbetrieb des für einen Linearbetrieb geeigneten Submoduls ermöglicht.

Der Erfindung liegt die Erkenntnis zugrunde, dass sich die Oberschwingungen in der wechselspannungsseitigen Ausgangsspannung dadurch reduzieren lassen, dass mindestens ein Submodul für einen Linearbetrieb geeignet ist. Durch diese Betriebsart kann die Spannung des einen Submoduls kontinuierlich verändert werden, so dass es zu keinen Sprüngen in der Ausgangsspannung kommt. Damit ist am Ausgang ein beliebiger kontinuierlicher Spannungsverlauf erzeugbar. Dabei ist die Erzeugung eines Sinusverlaufs als Ausgangsspannung eines Stromrichters besonders vorteilhaft. Da die Sprünge in der Ausgangsspannung Oberschwingungen in der Ausgangsspannung verursachen, können die Oberschwingungen mit einer kontinuierlichen Änderung der Ausgangsspannung vermieden werden. Es ist vorgesehen, dass mindestens ein Submodul mindestens eines Phasenmoduls im Linearbetrieb betrieben wird. Damit ergibt sich bei n in Reihe angeordneten Submodulen, n-1 Submodule mit geringen Verlusten aufgrund des pulsfrequenten Schaltens. Nur ein Modul wird mit größeren Verlusten betrieben. Da allerdings an diesem nur ein Bruchteil der Zwischenkreisspannung anliegt, verursacht dieses Modul auch nur einen Bruchteil der Verluste, die ein bisher bekannter linearer Steller verursacht. Damit ist er aufgrund deutlich geringerer Kühlungsanforderungen einfacher herstellbar und auch betreibbar. Wegen der geringen Verluste lassen sich auch Stromrichter mit großen Leistungen realisieren, die eine reine sinusförmige Ausgangsspannung am wechselspannungsseitigen Ausgang bereitstellen.

Im Gegensatz zu den bereits bekannten linearen Stellern weist diese Stromrichterschaltung bereits aufgrund ihrer Anzahl in Reihe angeordneten Submodule bereits einen hohen Wirkungsgrad auf.

Durch den kombinierten Einsatz von Halbleitern im geschalteten und linearen Betrieb ergibt sich eine hocheffiziente Umformung von elektrischer Spannung oder elektrischem Strom von einer Gleichgröße in eine ideale periodische Wechselgröße beliebiger Amplitude, Frequenz und Form. Durch die große Anzahl in Reihe geschalteter Submodule ist die Schaltleistung je Halbleiter beim Einsatz von n Submodulen je Phasenmodul um den Faktor n geringer als bei konventionellen 2-Punkt Wechselrichtern, dadurch reduziert sich die Verlustleistung im linearen Betrieb auf einen Faktor < 1/n. Bei entsprechender Auslegung ermöglicht die niedrige Spannung des Submoduls eine direkte Versorgung der Steuerungselektronik des Submoduls aus diesem Submodul ohne vorgeschalteten Wandler.

Damit eignet sich die Stromrichterschaltung auch im Besonderen dazu, diese für Mess- und Prüfzwecke zu verwenden, da sie einen benötigten Spannungsverlauf genau erzeugen kann.

Bei einer vorteilhaften Ausgestaltungsform weist die Stromrichterschaltung mehrere Phasenmodule auf, die in einer Parallelschaltung zueinander angeordnet sind. Mit einer derartigen Anordnung lassen sich auch mehrphasige, insbesondere dreiphasige, Komponenten mit den wechselspannungsseitigen Lastanschlüssen verbinden. Somit kann auch diesen mehrphasigen Komponenten mit Hilfe der erfindungsgemäßen Stromrichterschaltung eine sinusförmige Ausgangsspannung zur Verfügung gestellt werden.

Bei einer weiteren vorteilhaften Ausgestaltungsform weist jedes Phasenmodul mindestens ein für den Linearbetrieb geeignetes Submodul auf. Der Vorteil dieser Ausführungsform besteht darin, dass sich die Ausgangsspannung aller wechselspannungsseitigen Anschlüsse derart mit dem im Linearbetrieb befindlichen Submodulen beeinflusst werden kann, dass an den wechselspannungsseitigen Anschlüssen ein beliebiger kontinuierlicher Zeitverlauf, insbesondere ein Sinusverlauf, der Ausgangsspannung realisierbar ist. Das bedeutet, dass der Anteil an Oberschwingungen eines Sinusverlaufs gleich oder nahezu null ist.

Bei einer weiteren vorteilhaften Ausgestaltungsform weist jedes obere und jedes untere Stromrichterventil mindestens ein für den Linearbetrieb geeignetes Submodul auf. Der Vorteil dieser Anordnung besteht darin, eine Symmetrie zwischen positiven und negativen Potential des Zwischenkreises herzustellen. Dieses ermöglicht neben der Bereitstellung von kontinuierlichen Zeitverläufen der Ausgangsspannung eine einfachere Regelung von Kreisströmen, die zur Symmetrierung der Kondensatorspannungen der einzelnen Submodule genutzt werden kann. Darüber hinaus ist ein Nullsystem der wechselspannungsseitigen Ausgangsspannung durch diese Anordnung leichter beeinflussbar. Dadurch können negative Auswirkungen, wie z.B. Lagerströme bei Motoren, vermieden oder zumindest deutlich reduziert werden.

Bei einer weiteren vorteilhaften Ausgestaltungsform weisen das für den Linearbetrieb geeignete Submodul und die übrigen Submodule Leistungshalbleiter mit gleicher Spannungssperrfähigkeit auf. Dieses für den Linearbetrieb geeignete Submodul ist besonders einfach herstellbar. Aufgrund der gleichen Spannungssperrfähigkeit können in allen Submodulen die gleichen Bauteile verwendet werden. Diese Eigenschaft erhöht die Anzahl der Gleichteile im Stromrichter, so dass dieser einfach und kostengünstig herstellbar ist.

Bei einer weiteren vorteilhaften Ausgestaltungsform weist die Stromrichterschaltung eine Regelvorrichtung auf, die mit den Ansteuerbaugruppen elektrisch verbunden ist, wobei der Regelvorrichtung ein Sollwert für die Spannung zwischen dem wechselspannungsseitigem Anschluss und einem Bezugspotential vorgebbar ist und wobei die Stromrichterschaltung derart betreibbar ist, dass die Spannung zwischen dem wechselspannungsseitigem Anschluss und einem Bezugspotential dem Sollwert entspricht. Dabei wird dieser Sollwert nicht nur im zeitlichen Mittel erreicht, wie es bei pulsweitenmodulierten (PWM) Spannungen möglich ist. Der Sollwert wird zu jedem Zeitpunkt erreicht. Allerdings ist aufgrund von Signallaufzeiten und Antwortzeiten in der Regelstrecke mit einem leichten Zeitverzug zwischen Sollwertvorgabe und Realisierung der Ausgangsspannung, die dem Sollwert entspricht, zu rechnen. Damit können der Regelung der Stromrichterschaltungen beliebige Zeitverläufe vorgegeben werden, die die Stromrichterschaltung als Spannung gegenüber dem Bezugspotential am wechselspannungsseitigen Anschluss herstellt.

Bei einer weiteren vorteilhaften Ausgestaltungsform weist die Stromrichterschaltung eine Regelvorrichtung auf, die mit den Ansteuerbaugruppen elektrisch verbunden ist, wobei der Regelvorrichtung ein Sollwert für die Spannung zwischen zwei wechselspannungsseitigen Anschlüssen vorgebbar ist und wobei die Stromrichterschaltung derart betreibbar ist, dass die Spannung zwischen zwei wechselspannungsseitigen Anschlüssen dem Sollwert entspricht. Dieses Ausführungsbeispiel entspricht im Prinzip dem vorgenannten, wobei allerdings die Regelung nicht auf eine Spannung zwischen einem wechselspannungsseitigem Anschluss und Bezugspotential sondern auf die Spannung zwischen zwei wechselspannungsseitigen Anschlüssen ausgerichtet ist.

Bei einer weiteren vorteilhaften Ausgestaltungsform ist die Spannung zwischen zwei wechselspannungsseitigen Anschlüssen oder die Spannung zwischen dem wechselspannungsseitigem Anschluss und einem Bezugspotential als Sinusverlauf erzeugbar. Der besondere Vorteil besteht darin, dass der Sinusverlauf für viele Anwendung benötigt wird und in der Vergangenheit durch mehr oder weniger aufwändige und kostenintensive Filterschaltungen realisiert werden musste. Auf diese Filterschaltung kann nun verzichtet werden. Beim Anschluss beispielsweise an ein Energieversorgungsnetz treten aufgrund des guten sinusförmigen Verlaufs der Ausgangsspannung der Stromrichterschaltung keine hochfrequenten störenden Ströme auf. Genauso verhält es sich bei an der Stromrichterschaltung angeschlossenen Lasten. Auch diese sind teilweise empfindlich gegenüber Oberschwingungen, die mit der erfindungsgemäßen Stromrichterschaltung nicht auftreten.

Damit eignet sich die Stromrichterschaltung auch im Besonderen dazu, diese für Mess- und Prüfzwecke zu verwenden, da sie einen benötigten Spannungsverlauf genau erzeugen kann.

Bei einer weiteren vorteilhaften Ausgestaltungsform weisen die Leistungshalbleiter des für den Linearbetrieb geeigneten Submoduls Feldeffekttransistoren, insbesondere MOSFETs, auf. Diese sind insbesondere dahingehend optimiert, einen Linearbetrieb zu realisieren. Ein für den Linearbetrieb geeignetes Submodul ist insbesondere mit diesen Halbleiterelementen einfach, kostengünstig und zuverlässig realisierbar.

Im Folgenden wird die Erfindung anhand der in den Figuren dargestellten Ausführungsbeispiele näher beschrieben und erläutert. Es zeigen:
- FIG 1: eine Phase einer erfindungsgemäßen Stromrichterschaltung
- FIG 2: eine dreiphasige erfindungsgemäße Stromrichterschaltung
- FIG 3: ein Submodul der erfindungsgemäßen Stromrichterschaltung mit Ansteuereinheit und Regelvorrichtung und
- FIG 4: ein Submodul mit MOSFETs als Leistungshalbleiter.

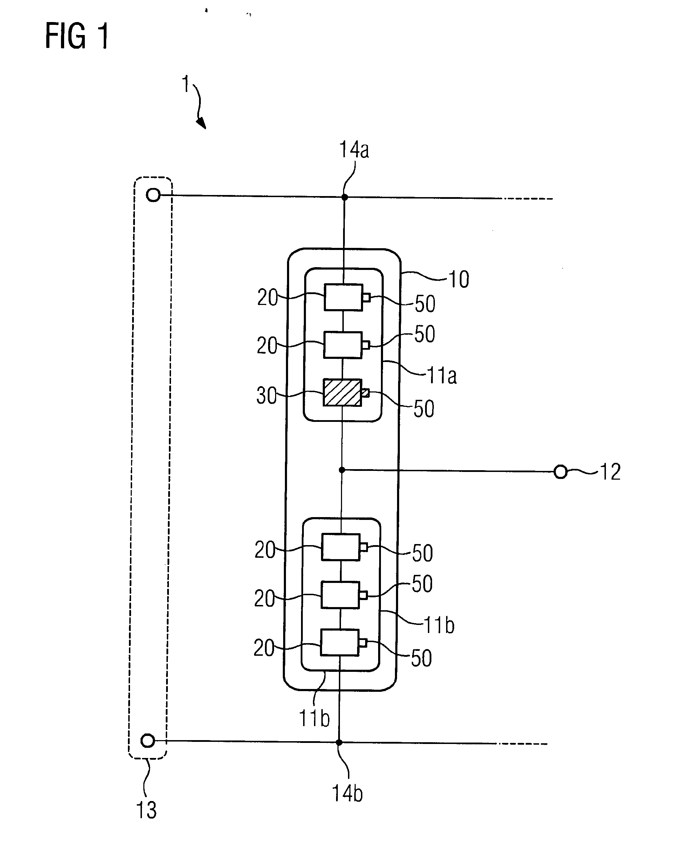

Die FIG 1 zeigt ein Ausführungsbeispiel der erfindungsgemäßen Stromrichterschaltung 1. Diese weist einen Gleichspannungsanschluss 13 auf. Mit diesen verbunden ist das Phasenmodul 10 mit seinen Anschlüssen 14a, 14b. Das Phasenmodul 10 umfasst die Reihenschaltung eines oberen Stromrichterventils 11a und eines unteren Stromrichterventils 11b. Der Verbindungspunkt dieser beiden Stromrichterventile 11a, 11b bildet den wechselspannungsseitigen Anschluss 12. Die beiden Stromrichterventile 11a und 111b weisen wiederum jeweils eine Reihenschaltung von Submodulen 20,30 auf. Jedes dieser Submodule steht in Verbindung mit einer Ansteuerbaugruppe, die vorteilhafterweise in der Nähe des Submoduls 20, 30 oder sogar innerhalb des Submoduls 20,30 angeordnet ist. In dem dargestellten Ausführungsbeispiel weist das obere Stromrichterventil ein für den Linearbetrieb geeignetes Submodul 30 auf. Dieses wird über seine Ansteuerbaugruppe 50 derart angesteuert, dass am wechselspannungsseitigen Ausgang gegenüber einem Bezugspotential eine Spannung mit kontinuierlichem Zeitverlauf erzeugt werden kann. Bei der Realisierung eines Sinusverlaufs der Ausgangsspannung kann diese ohne Oberschwingungsanteile realisiert werden.

Für die Regelung von Strömen innerhalb der Stromrichterschaltung 1 hat es sich als vorteilhaft erwiesen, wenn in Reihe zu den Submodulen 20, 30 eine Induktivität vorhanden ist. Dieses ist insbesondere für mehrphasige wechselspannungsseitige Ausgangsspannungen vorteilhaft, um Kreisströme zur Symmetrierung der Kondensatorspannungen zu erzeugen.

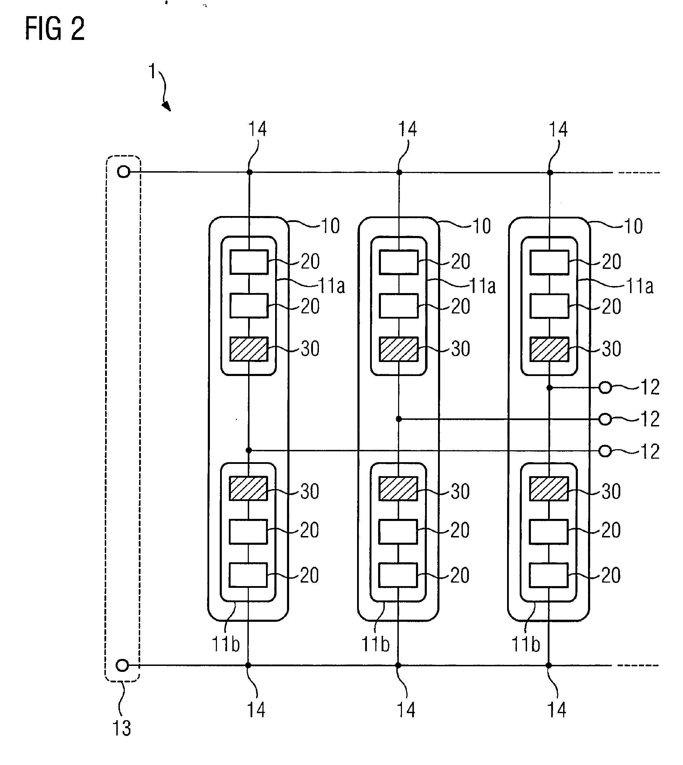

Die FIG 2 zeigt ein weiteres Ausführungsbeispiel der erfindungsgemäßen Stromrichterschaltung 1. Zur Vermeidung von Wiederholungen bezüglich übereinstimmender Bestandteile des Systems wird auf die Beschreibung zur FIG 1 und die dort eingeführten Bezugszeichen verwiesen. Im Gegensatz zum vorhergehenden Ausführungsbeispiel ist diese Stromrichterschaltung 1 mit dreiphasigen wechselspannungsseitigen Anschlüssen 12 ausgeführt. Diese sind insbesondere zum Anschluss an ein Energieversorgungsnetz geeignet. Das Energieversorgungsnetz stellt dabei ein Drehstromnetz dar. Ebenso können mit den drei wechselspannungsseitigen Anschlüssen elektrische Verbraucher, wie beispielsweise Motoren, gespeist werden, die zur Steuerung ihrer Drehzahl und ihres Drehmomentes eine in Spannungshöhe und Frequenz veränderbare Spannungsquelle benötigen. Aufgrund des Spannungsverlaufes am Ausgang können diese Verbraucher ohne eine Filterschaltung betrieben werden.

Jedes Stromrichterventil weist in der Reihenschaltung der Submodule 20, 30 ein für den Linearbetrieb geeignetes Submodul 30. Damit ist dieser Aufbau zum einen symmetrisch in Bezug auf die einzelnen Phasenmodule 10 und damit auch in Bezug auf die wechselspannungsseitigen Anschlüsse 12. Damit können die an den wechselspannungsseitigen Anschlüssen erzeugten Spannungen alle in gleicher Weise einen entsprechend vorgebbaren Spannungsverlauf erzeugen. Da jedes obere und untere Stromrichterventil 11a, 11b eines jeden Phasenmoduls 10 in diesem Ausführungsbeispiel ein für den Linearbetrieb geeignetes Submodul 30 aufweist, können die Spannungen der wechselspannungsseitigen Anschlüsse eines jeden Phasenmoduls 10 unabhängig voneinander vorgegeben werden.

Aufgrund der genauen Sinusform an den wechselspannungsseitigen Anschlüssen eignet sich diese Stromrichterschaltung im Besonderen auch für Mess- und Prüfzwecke, die eine besonders hohe Anforderung an die Spannungsform einer Spannungsquelle haben.

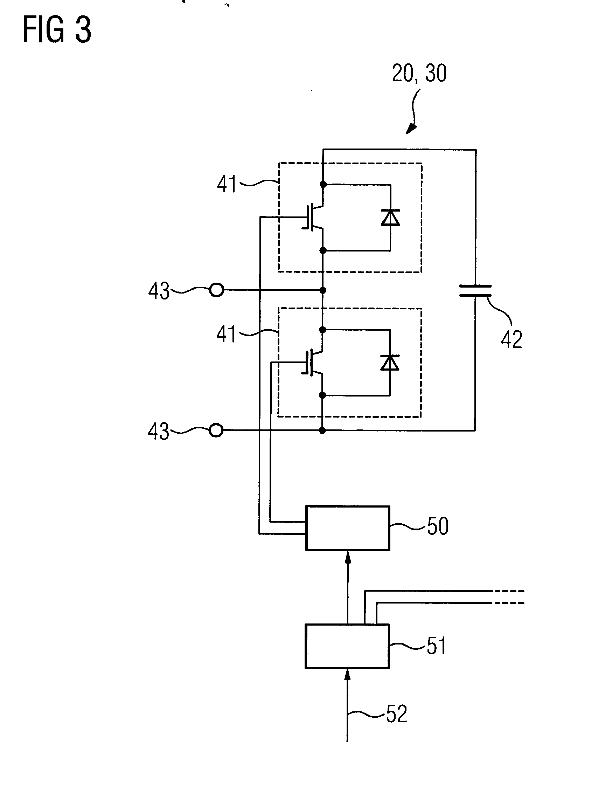

FIG 3 zeigt ein Ausführungsbeispiel eines Submoduls 20, 30. Dieses umfasst zwei in Reihe geschaltete Halbleiter 41 und einen parallel zu dieser Reihenschaltung angeordneten Kondensator 42. An den Anschlussklemmen 43 des Submoduls kann an den nicht im Linearbetrieb betriebenen Submodulen die Spannung des Kondensators oder die Spannung null angelegt werden. Die Ansteuerung der Leistungshalbleiter 41 erfolgt durch die Ansteuerbaugruppe 50. Wenn diese Ansteuerbaugruppe 50 in der Lage ist, das Submodul nicht nur wie zuvor beschreiben im Schaltbetrieb sondern auch den Linearbetrieb des Submoduls 30 ermöglicht, so kann bei diesem für den Linearbetrieb geeigneten Submodul 30 jede beliebige Spannung der Spannung 0 und der Spannung des Kondensators an den Anschlussklemmen 43 des Submoduls 30 angelegt werden. Die Vorgabe, welcher Spannungswert einzustellen ist, erhält die Ansteuerbaugruppe 50 von der übergeordneten Regelvorrichtung 51. Diese Regelvorrichtung 51 steuert die einzelnen Ansteuerbaugruppen 50 mit der Information an, welche Spannung das betreffende Submodul 20,30 an seinen Anschlussklemmen 43 zu liefern hat. Bei im Schaltbetrieb befindlichen Submodulen 20 gibt es hier nur eine digitale Information 0V oder Uc, während die im Linearbetrieb betriebenen Submodule 30 einen genauen Spannungswert aus der übergeordneten Regelvorrichtung 51 erhalten. Die Regelvorrichtung 51 wiederum ermittelt diese Ansteuersignale an die Ansteuerbaugruppen 50 aus der Vorgabe eines Sollwertes 52. Es hat sich als besonders vorteilhaft erwiesen, wenn der Regelvorrichtung Informationen über die Phasenströme und den Spannungen an den wechselspannungsseitigen Anschlüssen 12 der Stromrichterschaltung 1 zur Verfügung stehen.

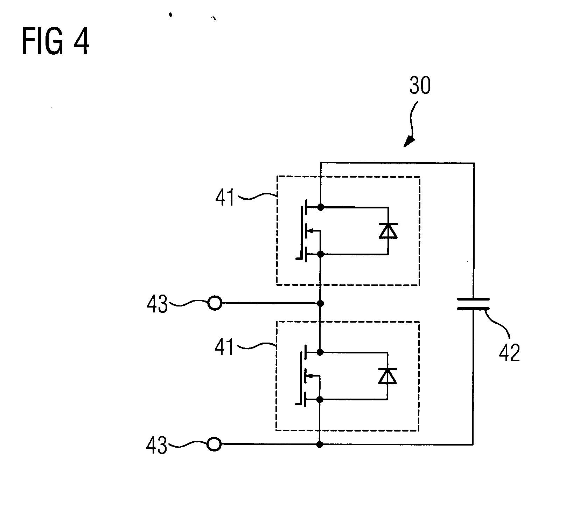

FIG 4 zeigt den Aufbau eines für den Linearbetrieb geeigneten Submoduls 30 mit MOSFETs. Dabei werden für die Leistungshalbeleiter 41 des Submoduls 30 MOSFETs verwendet.

Obwohl die Erfindung im Detail durch die bevorzugten Ausführungsbeispiele näher illustriert und beschrieben wurde, so ist die Erfindung nicht alleine durch die offenbarten Beispiele eingeschränkt und andere Variationen können vom Fachmann hieraus abgeleitet werden, ohne den Schutzumfang der Erfindung zu verlassen.

## Patentansprüche

1. Stromrichterschaltung (1) aufweisend
- einen Gleichspannungsanschluss (13),
- mindestens einen wechselspannungsseitigen Anschluss (12) und
- mindestens ein Phasenmodul (10),
wobei das Phasenmodul (10) eine Reihenschaltung von einem oberen und einem unteren Stromrichterventil (11a, 11b) aufweist,
wobei eine elektrische Verbindung zwischen dem oberen und dem unteren Stromrichterventil (11a, 11b) den wechselspannungsseitigen Anschluss (12) darstellt,
wobei die Anschlüsse (14a, 14b) des Phasenmoduls (10) mit dem Gleichspannungsanschluss (13) elektrisch verbunden sind, wobei das obere und das untere Stromrichterventil (11a, 11b) jeweils wenigstens zwei Submodule (20, 30) aufweisen, die elektrisch in Reihe angeordnet sind,
wobei die Submodule (20, 30) mindestens einen Kondensator (42), mindestens einen Leistungshalbleiter (41) und eine Ansteuerbaugruppe (50) zur Ansteuerung der Leistungshalbleiter (41) aufweisen,
wobei mindestens ein Stromrichterventil (11a, 11b) ein für einen Linearbetrieb geeignetes Submodul (30) aufweist und wobei die Stromrichterschaltung (1) eine Ansteuerbaugruppe (50) aufweist, die den Linearbetrieb des für einen Linearbetrieb geeigneten Submoduls (30) ermöglicht.

2. Stromrichterschaltung (1) nach Anspruch 1, **dadurch gekennzeichnet, dass** die Stromrichterschaltung (1) mehrere Phasenmodule (10) aufweist, die in einer Parallelschaltung zueinander angeordnet sind.

3. Stromrichterschaltung (1) nach einem der Ansprüche 1 oder 2, **dadurch gekennzeichnet, dass** jedes Phasenmodul (10) mindestens ein für den Linearbetrieb geeignetes Submodul (30) aufweist.

4. Stromrichterschaltung (1) nach einem der Ansprüche 1 bis 3, **dadurch gekennzeichnet, dass** jedes obere und jedes untere Stromrichterventil (11a, 11b) mindestens ein für den Linearbetrieb geeignetes Submodul (30) aufweisen.

5. Stromrichterschaltung (1) nach einem der Ansprüche 1 bis 4, **dadurch gekennzeichnet, dass** das für den Linearbetrieb geeignete Submodul (30) und die übrigen Submodule (20) Leistungshalbleiter (41) mit gleicher Spannungssperrfähigkeit aufweisen.

6. Stromrichterschaltung (1) nach einem der Ansprüche 1 bis 5, **dadurch gekennzeichnet, dass** die Stromrichterschaltung (1) eine Regelvorrichtung (51) aufweist, die mit den Ansteuerbaugruppen (50) elektrisch verbunden ist, wobei der Regelvorrichtung (51) ein Sollwert (52) für die Spannung zwischen dem wechselspannungsseitigem Anschluss (12) und einem Bezugspotential vorgebbar ist, wobei die Stromrichterschaltung (1) derart betreibbar ist, dass die Spannung zwischen dem wechselspannungsseitigem Anschluss (12) und einem Bezugspotential dem Sollwert (52) entspricht.

7. Stromrichterschaltung (1) nach einem der Ansprüche 1 bis 6, **dadurch gekennzeichnet , dass** die Stromrichterschaltung (1) eine Regelvorrichtung (51) aufweist, die mit den Ansteuerbaugruppen (50) elektrisch verbunden ist, wobei der Regelvorrichtung (51) ein Sollwert (52) für die Spannung zwischen zwei wechselspannungsseitigen Anschlüssen (12) vorgebbar ist, wobei die Stromrichterschaltung (1) derart betreibbar ist, dass die Spannung zwischen zwei wechselspannungsseitigen Anschlüssen (12) dem Sollwert (52) entspricht.

8. Stromrichterschaltung (1) nach einem der Ansprüche 1 bis 7, **dadurch gekennzeichnet, dass** die Spannung zwischen zwei wechselspannungsseitigen Anschlüssen (12) oder die Spannung zwischen dem wechselspannungsseitigem Anschluss (12) und einem Bezugspotential als Sinusverlauf erzeugbar ist.

9. Stromrichterschaltung (1) nach einem der Ansprüche 1 bis 8, **dadurch gekennzeichnet, dass** die Leistungshalbleiter (41) des für den Linearbetrieb geeigneten Submoduls (30) Feldeffekttransistoren, insbesondere MOSFETs, aufweisen.

10. Verfahren zum Betreiben einer Stromrichterschaltung (1) nach einem der Ansprüche 1 bis 9, **dadurch gekennzeichnet, dass** in mindestens einem Stromrichterventil (11a, 11b) mindestens ein Submodul (30) im Linearbetrieb betrieben wird.

11. Verfahren nach Anspruch 10, **dadurch ge- kennzeichnet**, dass in jedem Phasenmodul (10) mindestens ein Submodul (30) im Linearbetrieb betrieben wird.

12. Verfahren nach einem der Ansprüche 10 oder 11, **da- durch gekennzeichnet**, dass in jedem oberen und jedem unteren Stromrichterventil (11a, 11b) mindestens ein Submodul (30) im Linearbetrieb betrieben wird.

13. Verfahren nach einem der Ansprüche 10 bis 12, **dadurch gekennzeichnet, dass** das für den Linearbetrieb geeigneten Submoduls (30) im Linearbetrieb betrieben wird, wobei ein Arbeitspunkt derart eingestellt wird, dass am wechselspannungsseitigen Anschluss gegenüber einem Bezugspotential eine Spannung erzeugt wird, die dem der Regelvorrichtung vorgegebenen Sollwert entspricht.

14. Verfahren nach einem der Ansprüche 10 bis 13, **da- durch gekennzeichnet**, dass das für den Linearbetrieb geeigneten Submoduls (30) im Linearbetrieb betrieben wird, wobei ein Arbeitspunkt derart eingestellt wird, dass zwischen zwei wechselspannungsseitigen Anschlüssen eine Spannung erzeugt wird, die dem der Regelvorrichtung vorgegebenen Sollwert entspricht.

15. Verfahren nach einem der Ansprüche 10 bis 14, **da- durch gekennzeichnet**, dass die zwischen zwei wechselspannungsseitigen Anschlüssen erzeugte Spannung oder zwischen einem wechselspannungsseitige Anschluss (12) und einem Bezugspotential erzeugte Spannung einen Sinusverlauf darstellt, der frei von Oberschwingungen ist.
